# EUROPÄISCHE PATENTSCHRIFT

(11) **EP 3 883 846 B1**
(45) Veröffentlichungstag und Bekanntmachung des Hinweises auf die Patenterteilung: **02.07.2025**
(21) Anmeldenummer: 19820998.3
(22) Anmeldetag: 22.11.2019
(51) Int. Cl.: B62K 5/00, B62K 7/02, B62K 19/10, B62K 13/08

(54) **LEICHTFAHRZEUG**
LIGHT-VEHICLE
VÉHICULE LÉGER

(30) Priorität: 23.11.2018 DE 102018009184; 11.06.2019 DE 102019115811; 27.06.2019 DE 102019117433
(43) Veröffentlichungstag der Anmeldung: 29.09.2021
(73) Patentinhaber: Rood, Günter, 42899 Remscheid (DE)
(72) Erfinder: Rood, Günter, 42899 Remscheid (DE)
(74) Vertreter: Schleitzer, Dirk-Karsten
(86) Internationale Anmeldenummer: PCT/EP2019/082220
(87) Internationale Veröffentlichungsnummer: WO 2020/104651

(56) Entgegenhaltungen:
- EP-A1- 1 352 821
- EP-A1- 1 352 821
- EP-A1- 2 336 014
- EP-A1- 2 336 014
- EP-A1- 3 246 235
- EP-A1- 3 246 235
- WO-A1-03/016124
- WO-A1-03/016124
- WO-A1-2017/138174
- WO-A1-2017/138174
- WO-A1-2018/017040
- CN-A- 101 870 319
- CN-A- 101 870 319
- CN-A- 102 152 831
- CN-U- 206 900 565
- FR-A5- 2 144 459
- FR-A5- 2 144 459
- US-A- 5 072 961
- US-A- 5 072 961

## Beschreibung

Die Erfindung betrifft ein Leichtfahrzeug gemäß dem Oberbegriff des Anspruchs 1.

Im Hinblick auf ökologische sowie ökonomische Gesichtspunkte finden auf dem Gebiet des Transportwesens sehr schnell gravierende Änderungen statt. Dies betrifft insbesondere den Personentransport. Um aktuellen und zukünftigen Anforderungen zu genügen, gilt es, einen guten Kompromiss zwischen dem allgemeinen Erfordernis der Nachhaltigkeit und dem individuellen Wunsch nach Komfort und Sicherheit zu finden. Eine vermehrte Nutzung von Angeboten des Öffentlichen Personennahverkehrs (ÖPNV) scheitert häufig an der mangelnden Akzeptanz bei weiten Teilen der Bevölkerung. Als problematisch wird hierbei insbesondere der Aspekt der sog. "First and Last Mile" gesehen. Während zentrale Orte in aller Regel gut an das ÖPNV-Netz angebunden sind, ist die Anreise vom tatsächlichen Startpunkt, etwa der heimischen Wohnung, zu einem zentralen Verkehrsknotenpunkt sowie von einem solchen Knotenpunkt zum endgültigen Ziel einer Reise in der Regel mit erhöhtem Aufwand verbunden. Dies gilt insbesondere in ländlichen Gebieten, betrifft jedoch selbst Ballungsräume. Häufig wird der Aufwand, den ersten und letzten Abschnitt einer Reise zu Fuß oder durch mehrmaliges Umsteigen zurückzulegen, als unverhältnismäßig hoch angesehen. Ein entsprechend umfangreicher Ausbau der bestehenden ÖPNV-Infrastruktur, um nahezu flächendeckend eine Erreichbarkeit mit minimalem Aufwand zu gewährleisten, scheidet aus wirtschaftlichen Gründen aus. In der Folge wird selbst von grundsätzlichen Befürwortern des ÖPNV in vielen Fällen der motorisierte Individualverkehr (MIV) bevorzugt.

Kombinierte Lösungen, beispielsweise durch Zurücklegen eines Teils des Weges mit dem Fahrrad und Mitnahme des Fahrrads in öffentlichen Verkehrsmitteln, scheitern oft daran, dass die Mitnahme eines Fahrrads oder eines vergleichbar großen Fortbewegungsmittels bei weitem nicht in allen öffentlichen Verkehrsmitteln problemlos möglich ist. Dies ist oft bereits für die einzelne Mitnahme problematisch. Der zusätzliche Transport einer zu erwartenden Vielzahl von Fahrrädern, Rollern o.ä. ist mit der gegenwärtigen Infrastruktur öffentlicher Verkehrsmittel letztlich nicht realisierbar. In jedem Fall stellt ein Fahrrad oder dergleichen während der Fortbewegung mit dem ÖPNV letztlich ein vergleichsweise sperriges Gepäckstück dar. Zwar lässt sich beispielsweise ein Klapprad für einen platzsparenden Transport zusammenlegen. Allerdings ist dieser Vorgang meist kraft- und zeitaufwendig und lohnt sich von daher bei der Nutzung des ÖPNV auf kurzen oder mittleren Strecken kaum.

Eine nicht nur Fahrräder einschließende Möglichkeit, ein Fahrzeug auf einfache Weise, etwa durch Zusammenfalten, in eine kompakte Form zu bringen und somit platzsparend abstellen und lagern zu können, ist beispielsweise aus der gattungsgemäßen EP 3 246 235 A1 bekannt.

Alternative Systeme, die ähnlich einem Autoreisezug eine gesammelte Beförderung individueller Fahrzeuge erlauben, sind aufgrund des damit einhergehenden Platzbedarfs in der Regel teuer und nur unzureichend verfügbar.

Ein weiterer Umstand, der die Akzeptanz des ÖPNV in der Bevölkerung vermindert, ist die häufig mangelnde Sauberkeit öffentlicher Verkehrsmittel. Zeitmangel und Kostendruck führen insbesondere im Nahverkehr dazu, dass keine oder nur eine unzureichende Reinigung des Fahrgastbereichs durchgeführt wird. Verschmutzte oder Vandalismus unterworfene Sitze in Bussen oder Zügen entsprechen nicht den Komfortanforderungen vieler Passagiere.

Vor diesem Hintergrund ist Aufgabe der vorliegenden Erfindung, die Erreichbarkeit und Nutzbarkeit öffentlicher Verkehrsmittel zu erhöhen und dabei den Reisekomfort für Passagiere wesentlich zu erhöhen.

Die vorgenannte Aufgabe wird gelöst durch ein Leichtfahrzeug mit den Merkmalen gemäß Patentanspruch 1. Vorteilhafte Weiterbildungen sind jeweils Gegenstand der Unteransprüche.

Erfindungsgemäß ist das Fahrzeug reversibel von einer Fahrkonfiguration in eine Sitzkonfiguration überführbar, wobei das Fahrzeug in der Sitzkonfiguration eine Sitzfläche aufweist und wobei der Abstand zwischen dem vorderen Radaufbau und dem hinteren Radaufbau des Fahrzeugs in der Sitzkonfiguration geringer ist als in der Fahrkonfiguration.

Der Abstand der Radaufbauten ist in der Sitzkonfiguration derart bemessen, dass ein stabiler Stand des Fahrzeugs in der Sitzkonfiguration gewährleistet ist. Dies gilt insbesondere für den Fall, dass ein Benutzer auf der Sitzfläche des Fahrzeugs in der Sitzkonfiguration sitzt. Von einem stabilen Stand ist insbesondere dann auszugehen, wenn ein Umstürzen des Fahrzeugs erst bei einer Verkippung des Fahrzeugs gegen die vertikale Achse um wenigstens 10°, vorzugsweise wenigstens 20°, erfolgt.

Die Möglichkeit, das Fahrzeug mit geringem Aufwand in eine platzsparende Sitzmöglichkeit umzuwandeln, erlaubt insbesondere die Mitnahme des Fahrzeugs in öffentlichen Verkehrsmitteln, ohne dass ein wesentlich größerer Platzbedarf besteht als ein gewöhnlicher Sitzplatz in einem Bus oder einem Zug ohnehin in Anspruch nähme. Im Ergebnis erlaubt die vorliegende Erfindung die nahtlose Integration in das Angebot des öffentlichen Nah- und/oder Fernverkehrs durch Nutzung von zumindest teilweise leer bzw. unbestuhlt bereitgestellten Wagen öffentlicher Verkehrsmittel. Ein Fahrgast, der mit dem erfindungsgemäßen Fahrzeug beispielsweise zu einer Haltestelle des ÖPNV angereist ist, kann sein Fahrzeug im öffentlichen Verkehrsmittel somit als eigene Sitzgelegenheit verwenden. Weitere Raumanforderungen, insbesondere zum Verstauen des Fahrzeugs, wie im Fall eines Fahrrads oder dergleichen, bestehen dagegen nicht. Dies ist insbesondere im Fall vieler Fahrzeuge vorteilhaft. Im Ergebnis wird somit eine wesentliche Hürde zur Verbindung von öffentlichem und individuellem Personenverkehr ausgeräumt.

Durch die Nutzung der eigenen Sitzmöglichkeit entfällt zudem das Problem, dass Passagiere auf verschmutzten oder beschädigten Sitzen des Verkehrsmittels Platz nehmen müssen. Darüber hinaus lässt sich durch die Nutzung eines individuellen, vorzugsweise ergonomischen Sitzes die Sitzposition und damit der Komfort für den Benutzer einstellen und wird auch während der Reise mit dem öffentlichen Verkehrsmittel beibehalten. Dies hat insbesondere Vorteile für Personen, die aus medizinischen Gründen besondere Anforderungen an ihren Sitz haben.

Es versteht sich, dass sich durch das erfindungsgemäße Fahrzeug Vorteile nicht nur im öffentlichen Nah- und Fernverkehr ergeben. Auch die effiziente Nutzung nicht öffentlicher Trägerfahrzeuge, beispielsweise im privaten Bereich oder beim Transport von Sicherheits- und Einsatzkräften, wird durch die Erfindung ermöglicht. Ein verbreiteter Einsatz im öffentlichen Personentransport, insbesondere im ÖPNV, hat jedoch den größten Einfluss auf eine positive ökologische Entwicklung. Daher wird diese Anwendung hier besonders herausgestellt. Alle Ausgestaltungen und Vorteile der Erfindung, die in Bezug auf den öffentlichen Bereich beschrieben werden, gelten in gleicher oder entsprechender Weise auch für den nicht öffentlichen Bereich.

Nachfolgend werden bevorzugte Ausgestaltungen der Erfindung vorgestellt. Das erfindungsgemäße Fahrzeug kann eines oder mehrere der beschriebenen Merkmale in beliebiger Kombination aufweisen.

Das Fahrzeug weist eine Verstelleinrichtung zur Veränderung des Abstands des vorderen Radaufbaus und des hinteren Radaufbaus auf.

Das Fahrzeug kann zusätzlich zur Fahrkonfiguration und zur Sitzkonfiguration in eine Transportkonfiguration überführbar sein. Vorzugsweise ist hierbei der Abstand des vorderen Radaufbaus und des hinteren Radaufbaus in der Transportkonfiguration geringer ist als in der Sitzkonfiguration und/oder es sind die Außenabmessungen des Fahrzeugs gegenüber der Sitzkonfiguration und der Fahrkonfiguration zumindest in einer Dimension weiter verringert. Insbesondere lassen sich hierzu abragende Teile der Konstruktion, beispielsweise eine Sitzfläche, abnehmen, einklappen und/oder einfahren, so dass sich insgesamt eine kompaktere Form des Fahrzeugs in der Transportkonfiguration ergibt.

Der Abstand des vorderen Radaufbaus und des hinteren Radaufbaus in der Transportkonfiguration kann geringer sein als die Breite des Fahrzeugs.

Das Fahrzeug kann einen mehrteiligen Aufbau mit wenigstens zwei insbesondere gelenkig und/oder verschieblich miteinander verbundenen Fahrzeugabschnitten aufweisen, vorzugsweise wobei der vordere Radaufbau einem vorderen Fahrzeugabschnitt zugeordnet ist und der hintere Radaufbau einem hinteren Fahrzeugabschnitt zugeordnet ist.

Durch die Verringerung des Radabstands wird letztlich die Grundfläche des Fahrzeugs verkleinert, wenn es von der Fahr- in die Sitzkonfiguration überführt wird. Hierdurch wird der Platzbedarf in einem etwaigen Sammeltransportmittel erheblich verringert.

Das Antriebsmittel kann als Elektromotor ausgebildet sein. Hierdurch wird ein nahezu geräuschloser Vortrieb des Fahrzeugs ermöglicht.

Dem Antriebsmittel kann eine Brennstoffzelle zugeordnet sein.

Die Antriebseinrichtung kann insbesondere eine Mehrzahl von Antriebskonzepten parallel im Sinne eines Hybridantriebs verwirklichen.

Die Antriebseinrichtung wirkt insbesondere auf die Räder des hinteren oder des vorderen Radaufbaus. Vorzugsweise wird sowohl wenigstens ein Rad des vorderen Radaufbaus als auch wenigstens ein Rad des hinteren Radaufbaus, besonders bevorzugt alle Räder, angetrieben.

Das Antriebsmittel kann zum Beschleunigen des Fahrzeugs auf eine Geschwindigkeit von mindestens 5 km/h, vorzugsweise mindestens 10 km/h, bevorzugt mindestens 25 km/h, besonders bevorzugt mindestens 45 km/h ausgebildet sein.

Alternativ oder zusätzlich kann das Fahrzeug auch dazu konfiguriert sein, eine bestimmte Höchstgeschwindigkeit nicht zu überschreiten. Hierzu dient insbesondere eine entsprechende Abregelung. Vorzugsweise liegt die Höchstgeschwindigkeit bei maximal 6 km/h, bevorzugt bei maximal 12 km/h, weiter bevorzugt maximal 20 km/h. Je nach typischer Anwendungssituation des Fahrzeugs kann auch eine höhere Begrenzung der Höchstgeschwindigkeit, beispielsweise auf maximal 30 km/h, maximal 50 km/h oder maximal 60 km/h, vorgesehen sein.

Es kann ein Energiespeicher, insbesondere eine Batterie, ein Akkumulator oder dergleichen, vorgesehen sein, aus dem die Antriebseinrichtung mit Energie versorgt wird. Zur Überwachung des Ladezustands und eines etwaigen Ladevorgangs kann eine Regelungseinrichtung vorgesehen sein. Der Energiespeicher ist insbesondere durch Anschluss des Fahrzeugs an das Versorgungsnetz, beispielsweise an einer haushaltsüblichen Steckdose, aufladbar. Ein Aufladen und/oder eine Diagnose des Energiespeichers kann insbesondere nach der Kopplung des Fahrzeugs an ein Sammeltransportmittel mittels einer entsprechend ausgestalteten Kopplungseinrichtung erfolgen. Der Energiespeicher kann auch durch einen Treibstofftank gebildet oder ergänzt werden.

Der Energiespeicher besitzt vorzugsweise ein ausreichendes Speichervolumen aufweisen, um eine Fahrt ohne Wiederaufladen, Nachfüllen oder Austauschen des Energiespeichers über eine Strecke von mindestens 50 km, bevorzugt mindestens 100 km, zu ermöglichen.

Der Abstand des vorderen Radaufbaus und des hinteren Radaufbaus in der Fahrkonfiguration kann mindestens 1 m, vorzugsweise mindestens 1,5 m betragen.

Das Fahrzeug kann eine offene Konstruktion aufweisen oder eine Fahrgastzelle umfassen. Die Fahrgastzelle kann dabei ganz oder teilweise abnehmbar und/oder verschließbar bzw. abschließbar ausgebildet sein.

Das Fahrzeug kann in der Fahrkonfiguration eine Karosserieform eines Rollers, eines Runabouts oder Buggys oder eines Dreirads aufweisen. Darüber hinaus ist zudem eine gokartartige Karosserieform bevorzugt.

Das Fahrzeug kann einen insbesondere zentral angeordneten Sitz umfassen. Zusätzlich ist im Rahmen der Erfindung auch eine Ausgestaltung mit einer Mehrzahl von Sitzen möglich. Alternativ oder zusätzlich kann ein offener oder vorzugsweise separat verschließbarer Stauraum für Transportgut vorgesehen sein.

Der Sitz umfasst insbesondere eine Sitzfläche und eine Sitzlehne. Vorzugsweise ist der Sitz zumindest teilweise sowohl in der Fahrkonfiguration als auch in der Sitzkonfiguration benutzbar, indem sich eine Person auf die Sitzfläche setzt. Die Sitzposition und/oder die Sitzform ist vorzugsweise einstellbar.

Zur Steuerung des Fahrzeugs während des Fahrbetriebs sind insbesondere Steuereinrichtungen vorgesehen. Hierzu zählt beispielsweise eine Lenkung, vorzugsweise in Form einer Achsschenkellenkung. Die Lenkung kann über eine Lenksäule und ein Lenkmittel mechanisch bedient werden, oder aber elektronisch gesteuert werden.

Grundsätzlich ist das Fahrzeug nicht auf eine bestimmte Technologie der Lenkung beschränkt. Alternativ oder zusätzlich können etwa von Liegerädern oder Velomobilen bekannte Lenktechnologien, insbesondere eine Panzerlenkung, eine Unterlenkung, eine Oberlenkung oder ein UDK-Lenker ("Um die Knie") bzw. ein sogenannter Aerolenker, realisiert sein.

In ähnlicher Weise können auch Bedienelemente zur Beschleunigung und Verzögerung des Fahrzeugs auf einem mechanischen oder elektronischen Wirkprinzip beruhen oder eine Mischung beider Konzepte verwirklichen. Insbesondere sind mechanisch wirkende Elemente wie eine Lenksäule und/oder Pedale derart ausgebildet, dass sie beim Übergang von der Fahrkonfiguration in die Sitzkonfiguration und/oder Transportkonfiguration eingefahren und/oder weggeschwenkt werden können.

Es kann eine Kopplungseinrichtung zur Kopplung des Fahrzeugs mit einer korrespondierenden Kopplungsaufnahme, insbesondere einer Kopplungsaufnahme eines Sammeltransportmittels, vorgesehen sein. Bei dem Sammeltransportmittel handelt es sich insbesondere um einen Bus, eine Bahn bzw. einen Zug, eine Fähre oder eine Seil- bzw. Gondelbahn. Die Kopplungseinrichtung kann insbesondere zur Kopplung des Fahrzeugs mit mehreren unterschiedlichen Sammeltransportmitteln ausgebildet, insbesondere standardisiert, sein.

Die Kopplungseinrichtung ist insbesondere Teil eines Kopplungssystems. Das Kopplungssystem kann auf Seiten des Sammeltransportmittels jeweils eine einzelne Aufnahme für die Kopplungseinrichtung oder ein Schienensystem zur Verbindung mit einer oder mehreren Kopplungseinrichtungen umfassen. Die Kopplungseinrichtung als solche kann ferner eine Hakenanordnung umfassen, die zur Verbindung mit einer korrespondierenden Aufnahme dient. Alternativ oder zusätzlich kann die Kopplungseinrichtung dazu ausgebildet sein nach dem Prinzip einer Docking-Station mit einer insbesondere standardisierten Aufnahme verbunden zu werden. Durch die Nutzung eines Sammeltransportmittels lassen sich größere Entfernungen auf ökonomischere und ökologisch verträglichere Weise zurücklegen als es üblicherweise im Wege des Individualverkehrs möglich wäre. Das erfindungsgemäße Fahrzeug dient in diesem Zusammenhang insbesondere zur Überbrückung der sogenannten "ersten und letzten Meile", d.h. jeweils der Wege zwischen dem genauen Start- bzw. Zielort und dem Zugangspunkt zum Sammeltransportmittel, welches auf dem Hauptteil der zurückzulegenden Strecke zwischen Start- und Zielort als Transportmittel dient.

Das Fahrzeug kann ein insbesondere ausziehbares Griffelement aufweisen.

Es ist eine Feststelleinrichtung zum Blockieren wenigstens eines Rades, vorzugsweise aller Räder, vorgesehen.

Die Feststelleinrichtung ist durch Überführen des Fahrzeugs in die Sitzkonfiguration aktivierbar.

Die Feststelleinrichtung kann alternativ oder zusätzlich durch eine insbesondere am Griffelement angeordnete Bedieneinrichtung aktivierbar und/oder deaktivierbar sein.

Das Fahrzeug kann eine vorzugsweise ausfahrbare oder ausschwenkbare Stützeinrichtung zur Stabilisierung des Fahrzeugs in einer stehenden Position insbesondere in der Transportkonfiguration aufweisen.

Weitere Aspekte der Erfindung sind der nachfolgenden Beschreibung von Ausführungsbeispielen zu entnehmen. Dabei bilden alle beschriebenen oder zeichnerisch dargestellten Merkmale eigenständige Aspekte der Erfindung, unabhängig von ihrer Kombination in den gezeigten Ausführungsformen oder in den Ansprüchen.

Es zeigt:
- Fig. 1: eine perspektivische schematische Darstellung eines erfindungsgemäßen Fahrzeugs in einer bevorzugten Ausführungsform,
- Fig. 2: eine Seitenansicht des Fahrzeugs von Fig. 1,
- Fig. 3: eine perspektivische schematische Darstellung eines Teils des Fahrzeugs von Fig. 1,
- Fig. 4: eine perspektivische schematische Darstellung einer weiteren bevorzugten Ausführungsform des erfindungsgemäßen Fahrzeugs,
- Fig. 5: eine Seitenansicht des Fahrzeugs von Fig. 4 in Fahrkonfiguration,
- Fig. 6: eine Seitenansicht des Fahrzeugs von Fig. 4 in Sitzkonfiguration,
- Fig. 7: eine Seitenansicht des Fahrzeugs von Fig. 4 in Transportkonfiguration und
- Fig. 8: eine perspektivische schematische Darstellung einer weiteren bevorzugten Ausführungsform des erfindungsgemäßen Fahrzeugs.

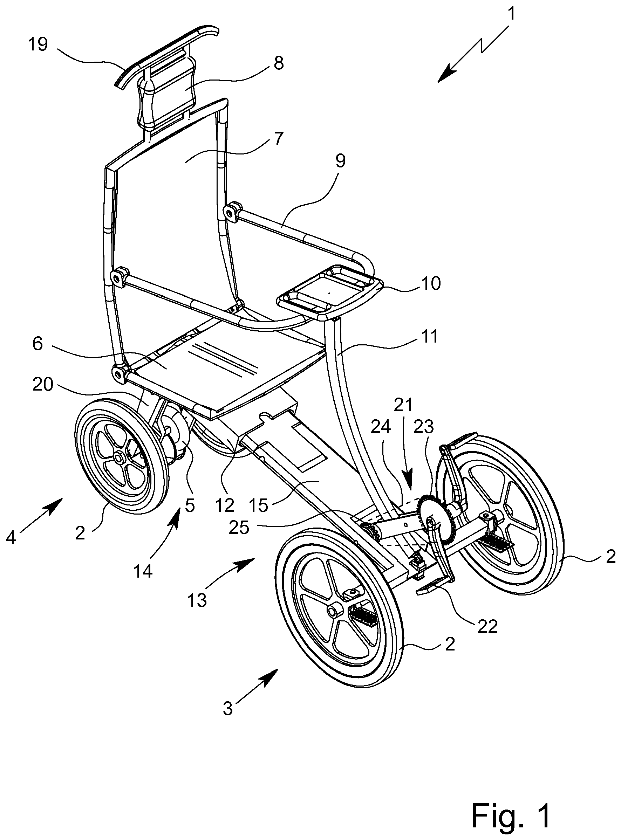

In Fig. 1 ist ein erfindungsgemäßes Fahrzeug 1 in Fahrkonfiguration dargestellt. Die gezeigte bevorzugte Ausführungsform des Fahrzeugs 1 weist insgesamt vier Räder 2 auf, die sich jeweils paarweise auf einen vorderen Radaufbau 3 und einen hinteren Radaufbau 4 verteilen.

Jeder Radaufbau 3, 4 kann jedoch auch eine andere Anzahl an Rädern 2 aufweisen. Alternativ ist beispielsweise auch eine Ausführungsform bevorzugt, bei welcher der hintere Radaufbau 4 lediglich ein Rad 2 aufweist.

Das Fahrzeug 1 weist eine Antriebseinrichtung 5 auf, bei der es sich insbesondere um einen Elektromotor, bevorzugt einen elektrischen Nabenmotor handelt. Alternativ oder zusätzlich kann auch ein Verbrennungsmotor vorgesehen sein, um den Vortrieb des Fahrzeugs 1 zu bewirken.

Zur Energieversorgung der Antriebseinrichtung 5 kann ein nicht im Einzelnen dargestellter Energiespeicher vorgesehen sein. Hierbei kann es sich um einen insbesondere wiederaufladbaren und/oder austauschbaren Akkumulator und/oder einen wiederauffüllbaren und/oder austauschbaren Treibstofftank handeln. Wenngleich aus ökologischen Gründen ein elektrischer Antrieb bevorzugt ist, kann die für die Fortbewegung benötigte Energie alternativ oder zusätzlich auch aus fossilen Brennstoffen bereitgestellt werden, beispielsweise durch Ottokraftstoff, Dieselkraftstoff, Erdgas und/oder Autogas/LPG.

Alternativ oder zusätzlich kann die Energieversorgung des Fahrzeugs 1, insbesondere der Antriebseinrichtung 5, auch mittels einer Photovoltaikeinrichtung und/oder mittels einer Brennstoffzelle erfolgen.

Das Fahrzeug 1 weist eine Sitzfläche 6 auf, auf der ein Benutzer, insbesondere ein Fahrer des Fahrzeugs 1 Platz nehmen kann. Zur Erhöhung der Sicherheit und des Komforts für den Benutzer kann das Fahrzeug 1 ferner eine Lehne 7 und/oder eine Kopfstütze 8 aufweisen.

Die Sitzfläche 6, die Lehne 7 und/oder die Kopfstütze 8 sind vorzugsweise in Position und/oder Neigung verstellbar. Bevorzugt ist hierbei eine separate Verstellung der betreffenden Elemente möglich. Eine Fixierung erfolgt insbesondere mittels eines Rastgelenks und/oder durch ein Formschlusselement.

**In** der dargestellten Fahrkonfiguration ist der auf der Sitzfläche 6 sitzende Fahrer insbesondere von einem Sicherheitsbügel 9 zumindest teilweise umgeben. Der Sicherheitsbügel 9 verhindert das Herausfallen des Fahrers aus dem Fahrzeug 1 beim Auftreten von Querbeschleunigungen, beispielsweise bei Kurvendurchfahrten. Darüber hinaus kann der Sicherheitsbügel 9 auch zur Befestigung weiterer funktionaler Einrichtungen des Fahrzeugs 1 dienen.

Die Steuerung des Fahrzeugs 1 erfolgt vorzugsweise mittels einer Steuereinrichtung 10. Insbesondere kann mittels der Steuereinrichtung 10 im Sinne einer Lenkung die Fahrtrichtung des Fahrzeugs 1 während der Fahrt geändert werden. Alternativ oder zusätzlich kann die Steuereinrichtung 10 zur Steuerung der Antriebseinrichtung 5 dienen, so dass beispielsweise die Fahrgeschwindigkeit eingestellt werden kann.

Ferner können mittels der Steuereinrichtung 10 auch andere funktionale Einrichtungen des Fahrzeugs 1 gesteuert, aktiviert und/oder deaktiviert werden. Die Steuereinrichtung 10 dient insbesondere als Benutzerschnittstelle zwischen dem Fahrzeug 1 und dem Fahrer bzw. Benutzer. Vorzugsweise weist die Steuereinrichtung 10 hierzu ein entsprechendes Eingabemittel und/oder eine Anzeigeeinrichtung auf. Es versteht sich, dass unterschiedliche Funktionen der Steuereinrichtung 10 nicht zwingend demselben Bauteil zugeordnet sein müssen.

Insbesondere kann die Steuerung von die Fortbewegung betreffenden Funktionen, beispielsweise Lenkung und/oder Geschwindigkeit, durch ein konstruktiv anderes Bauteil erfolgen als die Beeinflussung weiterer funktionaler Einrichtungen des Fahrzeugs 1. Bevorzugt ist zumindest für die Lenkung des Fahrzeugs 1 eine separate Lenkeinrichtung, insbesondere ein Lenkrad, vorgesehen.

Die Lenkung des Fahrzeugs 1 erfolgt vorzugsweise unter Verwendung einer sogenannten Ackermann-Anordnung, die bei einer Kurvendurchfahrt für jedes Rad 2 einen dem jeweiligen Kurvenradius entsprechenden Lenkwinkel gewährleistet.

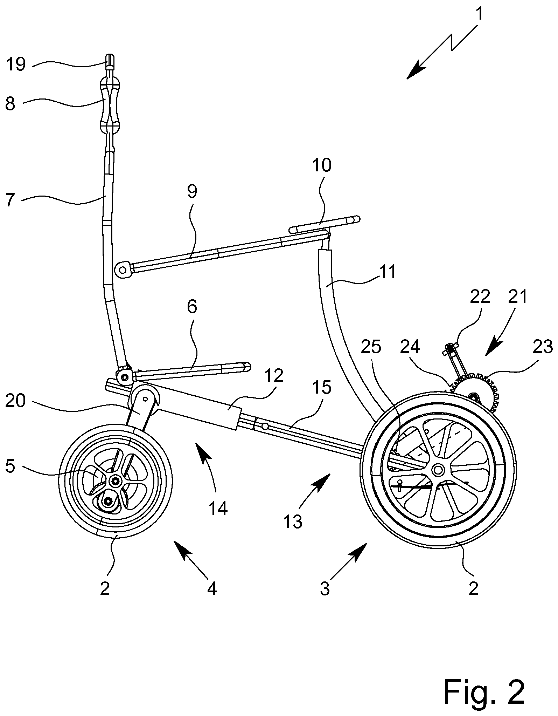

Bei der in Fig. 1 und 2 dargestellten Ausführungsform ist die Steuereinrichtung 10 durch ein optionales Halteelement 11 getragen. Mittels des Halteelements 11 wird insbesondere eine mechanische und/oder elektronische Verbindung der Steuereinrichtung 10 mit weiteren funktionalen Einrichtungen des Fahrzeugs 1 hergestellt. Das Halteelement 11 kann beispielsweise eine Lenksäule und/oder eine Lenkwelle umfassen bzw. enthalten. Alternativ oder zusätzlich kann das Halteelement auch eine Datenleitung und/oder eine Leitung zur Energieversorgung der Steuereinrichtung 10 aufweisen. Die Halteeinrichtung 11 kann auch lediglich als Träger einer solchen Verbindungsleitung, einer Lenksäule und/oder einer Lenkwelle dienen.

Die Steuereinrichtung 10 kann alternativ oder zusätzlich auch mit anderen Einrichtungen des Fahrzeugs 1 verbunden sein. Insbesondere falls lediglich eine elektronische Verbindung erforderlich ist, kann die Steuereinrichtung 10 letztlich an einem beliebigen Bauteil des Fahrzeugs 1, insbesondere am Sicherheitsbügel 9, befestigt sein.

Darüber hinaus kann auch eine drahtlose Verbindung der Steuereinrichtung 10 mit Einrichtungen des Fahrzeugs 1 vorgesehen sein. Bevorzugt ist die Steuereinrichtung 10 abnehmbar ausgebildet und/oder kann vom Benutzer als separates Bauteil benutzt werden, das mit den weiteren Komponenten des Fahrzeugs 1 lediglich über eine insbesondere drahtlose Verbindung zur Datenübertragung und/oder Energieübertragung verbunden ist.

In einer bevorzugten Ausgestaltung ist die Steuereinrichtung 10 zur Bedienung vom Benutzer als separates Bauteil getrennt vom Rest des Fahrzeugs 1 zu halten und wird, vorzugsweise, zum Aufladen eines Akkumulators der Steuereinrichtung 10 in eine entsprechende Halterung eingesetzt bzw. an einem Halteelement 11 befestigt. Das Laden eines Akkumulators der Steuereinrichtung 10 erfolgt dann insbesondere induktiv.

Alternativ oder zusätzlich kann eine Halterung für einen Tablet-Computer und/oder ein Smartphone vorgesehen sein.

Insbesondere kann das Fahrzeug 1 zumindest teilweise zur Steuerung mittels eines Tablet-Computers und/oder eines Smartphones ausgebildet sein. Eine bevorzugte auf diese Weise gesteuerte Funktion ist etwa die Entriegelung bzw. Freigabe des Fahrzeugs 1 durch eine Benutzeridentifikation. Ferner können Funktionseinstellungen mittels eines Tablet-Computers, eines Smartphones und/oder der Steuereinrichtung 10 vorgenommen werden. Darüber hinaus ist ein Auslesen technischer Parameter, beispielsweise zurückgelegte Wegstrecke, Lade- bzw. Füllzustand eines Energiespeichers oder Fehlermeldungen, auf entsprechende Weise möglich.

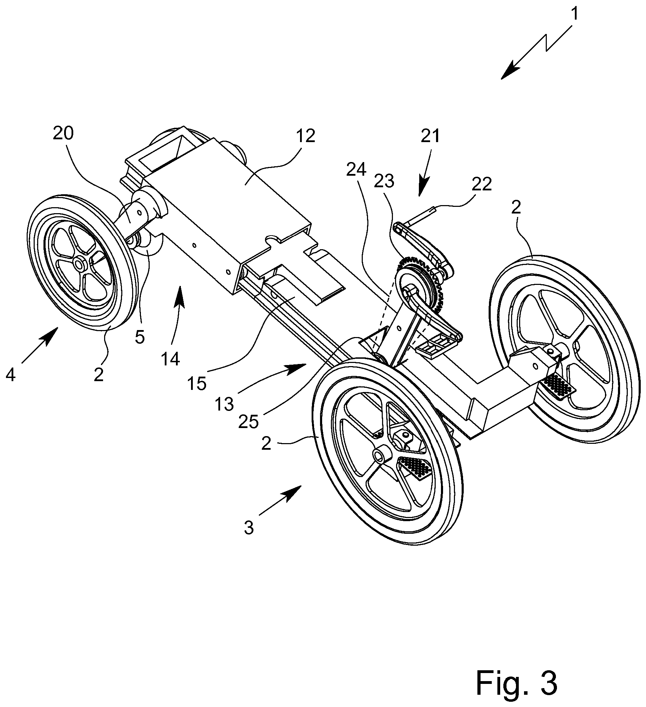

Fig. 3 gibt lediglich den unteren Teil des Fahrzeugs 1 wieder. Der Übersichtlichkeit halber sind in dieser Darstellung die oberen Aufbauteile, beispielsweise die Sitzfläche 6 und zugehörige Bauteile sowie das Halteelement 11 weggelassen. Anhand dieser Darstellung lassen sich der Aufbau und die Funktionsweise der betreffenden Teile des Fahrzeugs 1 erläutern. Die gezeigten Teile bilden insbesondere ein Fahrgestell des Fahrzeugs 1.

Das Fahrzeug 1 weist eine Verstelleinrichtung 12 auf, mittels derer sich der Abstand des vorderen Radaufbaus 3 und des hinteren Radaufbaus 4 verringern lässt. Hierdurch kann das Fahrzeug 1 von der Fahrkonfiguration in eine Sitzkonfiguration überführt werden. Durch den verringerten Abstand der Radaufbauten 3, 4 wird der Platzbedarf bezogen auf die Grundfläche des Fahrzeugs 1 erheblich verringert, so dass sich das Fahrzeug 1 problemlos in einem öffentlichen Verkehrsmittel bzw. einem Sammeltransportmittel an einer dafür vorgesehenen Stelle platzieren lässt. Trotz des geringeren Platzbedarfs sorgt die Konstruktion des Fahrgestells aus vorderem Radaufbau 3 und hinterem Radaufbau 4 für einen stabilen Stand des Fahrzeugs 1 in der Sitzkonfiguration.

Eine Fortbewegung mit dem Fahrzeug 1 ist in der Sitzkonfiguration nicht vorgesehen. Hierzu kann ein Rad 2 oder können mehrere Räder 2 mittels einer Feststelleinrichtung blockiert werden. Ein ungewolltes Bewegen, Verrutschen oder Wegrollen des Fahrzeugs 1 in der Sitzkonfiguration wird hierdurch unterbunden. Die Feststelleinrichtung ist durch Überführen des Fahrzeugs 1 in die Sitzkonfiguration aktivierbar.

Bevorzugt weist das Fahrzeug 1 einen vorderen Fahrzeugabschnitt 13 und einen hinteren Fahrzeugabschnitt 14 auf, wobei der vordere Radaufbau 3 dem vorderen Fahrzeugabschnitt 13 zugeordnet ist und der hintere Radaufbau 4 dem hinteren Fahrzeugabschnitt 14 zugeordnet ist.

Die Fahrzeugabschnitte 13, 14 sind insbesondere gelenkig und/oder verschieblich miteinander verbunden. Vorzugsweise weist hierzu der vordere Fahrzeugabschnitt 13 ein Grundgestell 15 auf, das mit der Verstelleinrichtung 12 zur Verbindung der Fahrzeugabschnitte 13, 14 zusammenwirkt.

Wie insbesondere anhand der seitlichen Darstellung des Fahrzeugs 1 gemäß Fig. 2 erkennbar ist, weist das Grundgestell 15 bei der hier beschriebenen Ausführungsform eine gerade Form auf und lässt sich in die komplementär geformte Verstelleinrichtung 12 einschieben. Hierdurch wird der vordere Radaufbau 3 näher an den hinteren Radaufbau 4 herangerückt, so dass die Abmessungen des Fahrzeugs 1, insbesondere die Länge betreffend, deutlich verringert werden.

Das Grundgestell ist bevorzugt aus einem entsprechend strukturstarken Material gefertigt oder weist ein solches auf. Insbesondere kommt hierbei ein Material aus nachwachsenden Rohstoffen zum Einsatz.

Die Überführung des Fahrzeugs 1 von der Fahrkonfiguration in die Sitzkonfiguration wird nachfolgend anhand einer weiteren bevorzugten Ausführungsform des Fahrzeugs 1 erläutert.

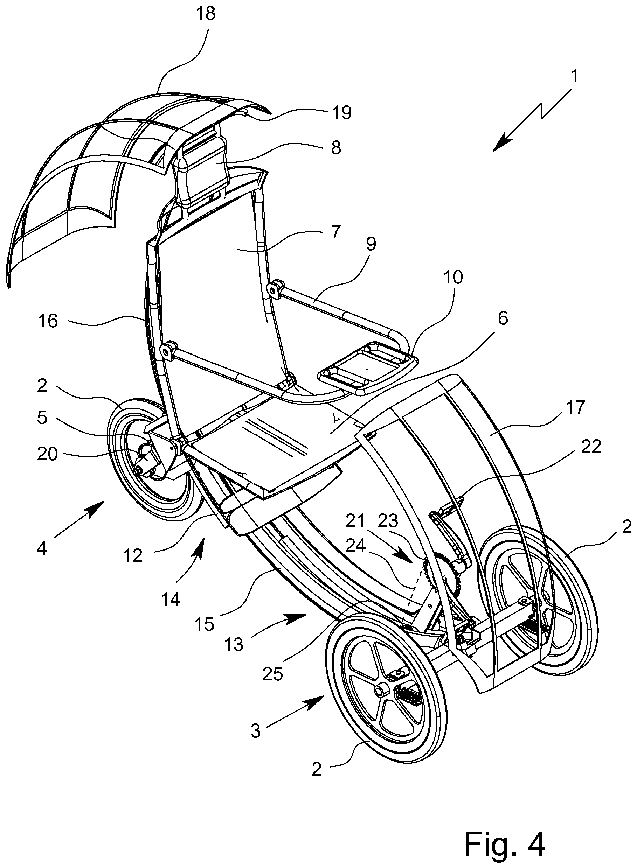

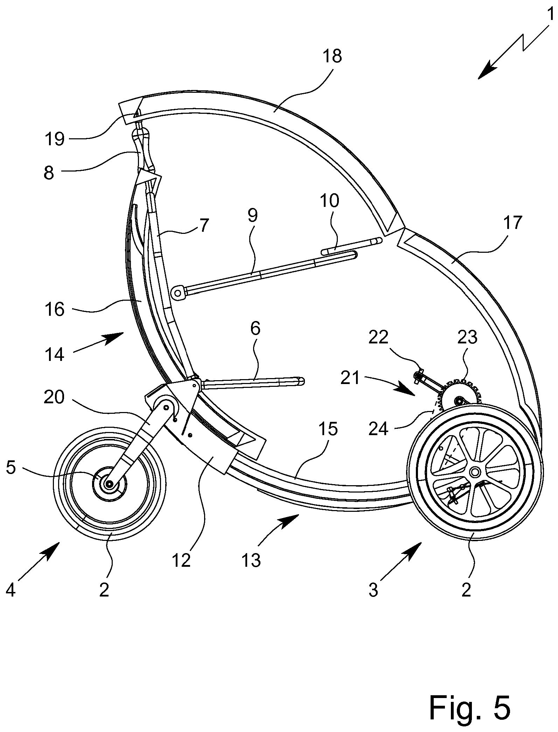

Die in den Fig. 4 bis 7 gezeigte Ausgestaltung des Fahrzeugs sieht vor, dass das Grundgestell 15 sowie die Verstelleinrichtung 12 eine gebogene Form aufweisen. Dies wird insbesondere anhand der seitlichen Darstellung der Fig. 5 deutlich, welche das Fahrzeug 1 in Fahrkonfiguration zeigt. Auch in dieser Ausführungsform weist das Fahrzeug 1 einen vorderen Fahrzeugabschnitt 13 und einen hinteren Fahrzeugabschnitt 14 auf.

Dem hinteren Fahrzeugabschnitt 14 ist neben der Verstelleinrichtung 12 und dem hinteren Radaufbau 4 auch insbesondere ein Sitzgestell 16 zugeordnet. Vorzugsweise sind die Sitzfläche 6, die Lehne 7 und/oder der Sicherheitsbügel 9 vorzugsweise gelenkig am Sitzgestell 16 gelagert.

Dem vorderen Fahrzeugabschnitt 13 ist insbesondere das Grundgestell 15, der vordere Radaufbau 3 und/oder das Halteelement 11 zugeordnet.

Bevorzugt dient das Sitzgestell 16 zumindest im Wesentlichen als Träger für diejenigen Aufbauteile, die der Unterstützung des Benutzers dienen. Das Grundgestell 15 verleiht dem Fahrzeug 1 insbesondere eine strukturelle Stabilität und trägt vorzugsweise alle wesentlichen Komponenten des Fahrzeugs 1. Durch die Verbindung des Grundgestells 15 mit dem Sitzgestell 16 über die Verstelleinrichtung 12 bleibt trotz der hohen Stabilität eine Flexibilität gewahrt, insbesondere in Bezug auf die Überführbarkeit des Fahrzeugs 1 von der Fahrkonfiguration in die Sitzkonfiguration und umgekehrt, d.h. eine Verwendung des Fahrzeugs 1 entweder als Transportmittel oder als Sitzmöglichkeit.

Vorzugsweise sind das Sitzgestell 16, die den Sitz betreffenden Aufbauten, d.h. Sitzfläche 6, Lehne 7 und Kopfstütze 8, die Verstelleinrichtung 12 und/oder der hintere Radaufbau 4 auf dem Grundgestell 15 geführt und/oder verschiebbar. Insbesondere mittels eines Rastbolzens und/oder eines Exzenterhebels können die entsprechenden Bauteile in unterschiedlichen definierten Positionen verriegelt und/oder insbesondere zumindest im Wesentlichen spielfrei gegenüber dem Grundgestell 15 verspannt werden.

Zum Schutz des Fahrers vor Wetter- und anderen Umwelteinflüssen ist bei der in den Fig. 4 bis 7 gezeigten Ausführungsformen des Fahrzeugs 1 eine Abschirmung vorgesehen, die eine untere Scheibe 17 und eine obere Scheibe 18 aufweist. Die Scheiben 17, 18 können aus demselben oder aus unterschiedlichen Materialien bestehen. Bevorzugt kommt hierbei Polycarbonat und/oder PMMA oder ein vergleichbares Material zum Einsatz.

Die obere Scheibe 18 weist vorzugsweise einen transparenten Bereich auf oder ist insgesamt transparent ausgebildet. Alternativ oder zusätzlich kann die obere Scheibe 18 auch eine Aussparung und/oder ein Sichtfenster aufweisen. Die untere Scheibe 17 kann vollständig intransparent ausgebildet sein, um einen Sichtschutz von außen auf den Fahrer und den unteren Bereich des Fahrzeugs 1 zu bilden. Darüber hinaus kann die untere Scheibe 17 jedoch auch teilweise oder vollständig transparent ausgebildet sein.

Die untere Scheibe 17 ist insbesondere dem vorderen Fahrzeugabschnitt 13 zugeordnet und kann ferner am Grundgestell 15 befestigt sein, beispielsweise durch eine Rast- und/oder Steckverbindung. Die obere Scheibe 18 wird vorzugsweise derart montiert, dass sie von einer Trageinrichtung 19 gehalten wird. Alternativ oder zusätzlich kann die obere Scheibe 18 auch mit oder an der unteren Scheibe 17 und/oder am Sicherheitsbügel 9 befestigt werden.

Vorzugsweise wird die obere Scheibe 18 zur Montage über die Trageinrichtung 19 eingeschoben bis sie die untere Scheibe 17 erreicht. In der finalen Position kann die obere Scheibe beispielsweise durch Verrasten und/oder Verklemmen fixiert werden. Insbesondere wird die obere Scheibe 18 am Sicherheitsbügel 9 fixiert, vorzugsweise durch eine reibschlüssige, rastschlüssige und/oder formschlüssige Verbindung. Darüber hinaus ist auch die Verwendung eines formschlüssig wirkenden Fixierelements zur Fixierung der unteren Scheiben 17 und/oder oberen Scheibe 18 möglich.

Alternativ zur hier vorgestellten mehrteiligen Ausführung der Abschirmung, insbesondere in Form der unteren Scheibe 17 und der oberen Scheibe 18, kann auch eine einteilige Ausgestaltung vorgesehen sein, bei der eine einzelne Scheibe, insbesondere nur eine untere Scheibe 17 oder eine obere Scheibe 18, je nach Zuordnung, vorgesehen ist.

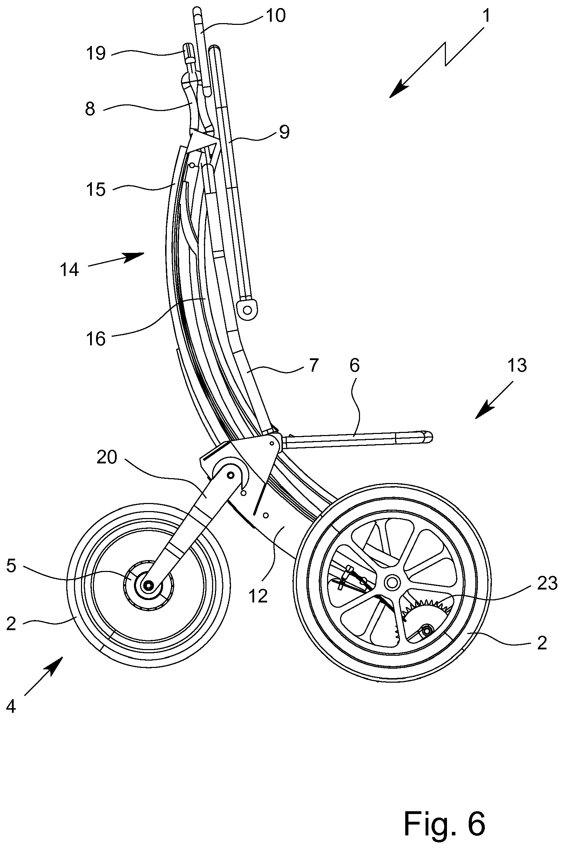

Die Überführung des Fahrzeugs 1 von der in Fig. 5 gezeigten Fahrkonfiguration in die in Fig. 6 dargestellte Sitzkonfiguration erfolgt insbesondere dadurch, dass das Grundgestell 15 in die Verstelleinrichtung 12 eingeschoben wird. Bei der hier gezeigten gebogenen Ausführung des Grundgestells 15 und der Verstelleinrichtung 12 sowie des Sitzgestells 16 weisen alle zusammenwirkenden Bauteile vorzugsweise zumindest im Wesentlichen eine gleiche Krümmung auf. Hierdurch schmiegt sich das eingeschobene Grundgestell 15 in der Sitzkonfiguration mit geringem Spiel an das Sitzgestell 16 an. Auf diese Weise wird eine besonders kompakte Form des Fahrzeugs 1 in der Sitzkonfiguration erreicht.

Die untere Scheibe 17 und/oder die obere Scheibe 18 kann zur Überführung von der Fahrkonfiguration in die Sitzkonfiguration abgenommen und platzsparend am Grundgestell 15 bzw. am Sitzgestell 16 angeordnet werden. Hierzu weist die Scheibe 17, 18 insbesondere eine zumindest im Wesentlichen gleiche Krümmung wie das Grundgestell 15 bzw. Sitzgestell 16 auf.

Das Halteelement 11 bzw. eine Lenksäule kann schwenkbar ausgebildet sein und/oder gegebenenfalls zumindest im Wesentlichen die gleiche Krümmung wie das Grundgestell 15 aufweisen. In diesem Fall lässt sich das Halteelement 11 bzw. die Lenksäule problemlos zur Überführung des Fahrzeugs 1 in die Sitzkonfiguration platzsparend am Grundgestell 15 anlegen, bevor der Abstand zwischen dem vorderen Radaufbau 3 und dem hinteren Radaufbau 4 verringert wird. Vorzugsweise weist das Grundgestell 15 eine entsprechende Aufnahme für das Halteelement 11 bzw. die Lenksäule und/oder eine Scheibe 17, 18 auf.

Bevorzugt wird die Lenkung beim Anlegen der Halteeinrichtung 11 bzw. der Lenksäule insbesondere mittig arretiert.

Die relative Position des vorderen Fahrzeugabschnitts 13 und des hinteren Fahrzeugabschnitts 14 bzw. des Grundgestells 15 und der Verstelleinrichtung 12 lässt sich vorzugsweise in definierten Positionen fixieren. Die Fixierung erfolgt insbesondere durch ein Rastmittel. Alternativ oder zusätzlich ist auch eine Fixierung durch ein Formschlusselement, beispielsweise einen Sperrbolzen und/oder einen Sicherungssplint, möglich.

Zur Überführung des Fahrzeugs in die Sitzkonfiguration wird vorzugsweise der Sicherheitsbügel 9 weggeschwenkt und/oder abgenommen, insbesondere nach oben geschwenkt. Auf diese Weise entsteht eine Sitzmöglichkeit für den Benutzer.

Durch eine ergonomische Form der Sitzfläche 6, der Lehne 7 und/oder der Kopfstütze 8 wird ein hohes Maß an Komfort für den Benutzer erzielt. Somit ist es möglich, auch längere Strecken auf dem Fahrzeug 1 in Sitzkonfiguration zu sitzen. Dadurch eignet sich das Fahrzeug 1 in besonderem Maße als Sitzgelegenheit auf längeren Reisen, beispielsweise in öffentlichen Verkehrsmitteln im Fernverkehr. Die Vorteile eines ergonomisch geformten, persönlichen Sitzes kommen jedoch ebenso im Bereich des ÖPNV zum Tragen. Insbesondere Pendler, die zwar kurze oder mittlere Strecken bei jeder Fahrt zurücklegen, dies jedoch häufig in hoher Frequenz, profitieren von der entsprechenden Ausgestaltung des erfindungsgemäßen Fahrzeugs 1.

Zur ortsfesten Positionierung des Fahrzeugs 1 insbesondere in der Sitzkonfiguration kann zusätzlich zu einer Feststelleinrichtung auch eine Kopplungseinrichtung vorgesehen sein, die es erlaubt, das Fahrzeug 1 mit einer korrespondieren Kopplungsaufnahme zu koppeln. Die Kopplungsaufnahme kann dabei einem Sammeltransportmittel, beispielsweise einem öffentlichen Verkehrsmittel, zugeordnet sein oder Teil dessen sein.

Darüber hinaus sind auch ein Andocken und Positionieren des Fahrzeugs 1 auf einem anderen festen Träger, wie z. B. auf einer Tribüne, möglich. Eine solche Anwendung bietet sich insbesondere an Event-Locations, im Kino, im Theater, bei Konzerten, in Stadien oder an vergleichbaren Orten an. Im Ergebnis kann der Nutzer des Fahrzeugs 1 in der Fahrkonfiguration bis an den gewünschten Ort heranfahren und durch das Überführen des Fahrzeugs 1 in die Sitzkonfiguration eine Sitzgelegenheit für sich herstellen, auf welcher er Platz nimmt, während er eine Veranstaltung oder Aufführung beobachtet. Für einen Veranstalter eines Events entfällt somit insbesondere sowohl das Erfordernis, ausreichend Parkraum für Besucherfahrzeuge zur Verfügung zu stellen, als auch die Notwendigkeit, für eine vollständige Bestuhlung des Veranstaltungsraums zu sorgen.

Bei öffentlichen Veranstaltungen, in Veranstaltungsgebäuden bzw. auf Veranstaltungsflächen werden hierzu vorzugsweise entsprechende Kopplungsaufnahmen bzw. Andockvorrichtungen bereitgestellt, um die Fahrzeuge 1 der Besucher insbesondere in der Sitzkonfiguration zu sichern. Alternativ oder zusätzlich kann auch eine Verbindung zur Energie- und/oder Datenübertragung zu den Fahrzeugen 1 hergestellt werden, so dass während der Veranstaltung beispielsweise ein Energiespeicher aufgeladen wird. Eine Datenübertragung ermöglicht es zudem, die Besucher in die Veranstaltung miteinzubeziehen, etwa indem Daten auf einer Anzeigeeinrichtung des Fahrzeugs 1 wiedergegeben werden. Es lassen sich somit beispielsweise zusätzliche Inhalte, wie Untertitel, übertragen oder es können interaktive Möglichkeiten, etwa in Form eines Zuschauervotings, realisiert werden.

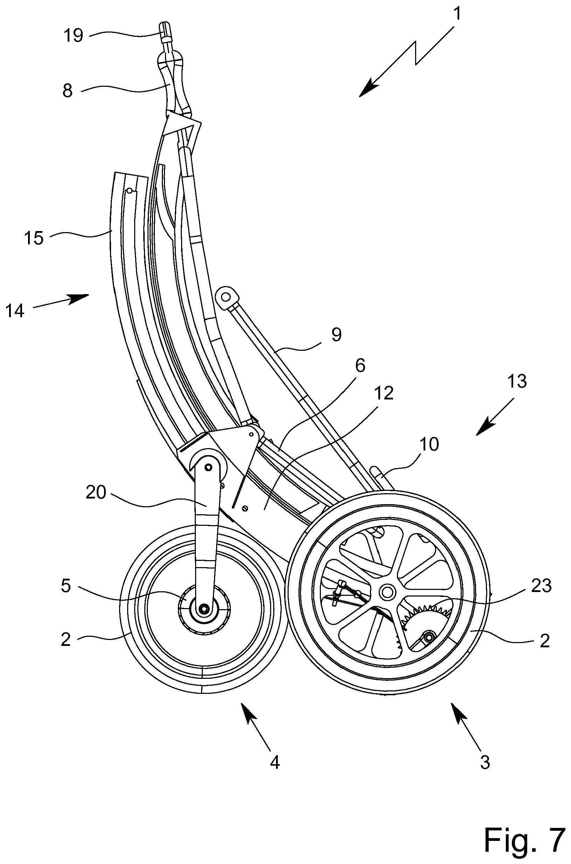

Für den vereinfachten Transport des Fahrzeugs 1 kann dieses in einer bevorzugten Ausgestaltung ferner in eine in Fig. 7 dargestellte Transportkonfiguration überführt werden. Gegenüber der Fahrkonfiguration und der Sitzkonfiguration zeichnet sich die Transportkonfiguration durch eine noch kompaktere Form des Fahrzeugs 1 aus. Insbesondere kann das Fahrzeug 1 in der Transportkonfiguration ähnlich einem Trolley vom Nutzer gezogen bzw. geschoben werden.

Die Umwandlungsfähigkeit des Fahrzeugs 1 durch Überführen in verschiedene Konfigurationen geht nicht nur mit Vorteilen beim Personentransport über weitere Strecken einher, sondern führt allgemein zu einer hohen Multifunktionalität. Das Fahrzeug 1 lässt sich beispielsweise als Einkaufswagen nutzen, in dem Einkäufe zunächst wie üblich gesammelt und durch ein Ladengeschäft geschoben werden. Nach dem Bezahlen fällt jedoch das Umladen in ein Fahrzeug, wie ein Auto oder ein Lastenrad, weg. Stattdessen wird das erfindungsgemäße Fahrzeug 1 lediglich von der Transport- in die Fahrkonfiguration überführt und dient somit als Fortbewegungs- und Transportmittel für Benutzer und Einkäufe. Am Ziel erfolgt vorzugsweise eine weitere Überführung in die Transportkonfiguration, so dass die Einkäufe bequem weitertransportiert werden können. Somit ist insbesondere ein umladefreier Transport vom Ladengeschäft bis in die Wohnung möglich. Die entsprechenden Vorteile ergeben sich in vergleichbarer Weise, wenn das Fahrzeug 1 nach dem Einkauf in der Sitzkonfiguration in einem öffentlichen Verkehrsmittel genutzt wird.

Als weitere Anwendungsmöglichkeit lässt sich das Fahrzeug 1 beispielsweise im Golfsport nutzen. Dort kann es in der Transportkonfiguration als Trolley für eine Golftasche zum Schlägertransport dienen. Hierzu ist vorzugsweise eine entsprechende Aufnahme für eine Golftasche o.ä. vorgesehen. Zum Zurücklegen weiterer Strecken auf dem Golfplatz kann zudem auf ein separates Golfcart verzichtet werden. Das erfindungsgemäße Fahrzeug 1 erfüllt diesen Zweck nach der Überführung in die Fahrkonfiguration. Das Fahrzeug 1 kann dabei jederzeit mit geringem Aufwand wieder in die Transportkonfiguration und/oder die Sitzkonfiguration überführt werden, um als Trolley bzw. als Sitzgelegenheit für den Golfspieler zu dienen.

Die vorgenannten Anwendungssituationen sind lediglich beispielhaft aufgeführt, um die allgemeine Multifunktionalität des erfindungsgemäßen Fahrzeugs 1 zu erläutern. Es versteht sich, dass sich aus der Erfindung eine Vielzahl weiterer Nutzungsmöglichkeiten in Bezug auf einen flexiblen Personen- und/oder Gütertransport ergibt. Gegebenenfalls sind für bestimmte Anwendungen entsprechende Anpassungen am Fahrzeug 1 vorzunehmen, beispielsweise in Form einer speziellen Aufnahme für Anbauteile, eines besonders großen Stauraums, etc. Diese schränken jedoch die erfindungsgemäße Funktionalität insbesondere nicht ein.

Vorzugsweise werden abragende Teile, wie die Sitzfläche 6, zum Überführen in die Transportkonfiguration gegenüber der Sitzkonfiguration eingefahren, eingeklappt und/oder abgenommen. Im vorliegenden Beispiel wird die Sitzfläche 6 nach unten weggeschwenkt. Alternativ oder zusätzlich wird auch der Sicherheitsbügel 9 weggeschwenkt, eingefahren und/oder abgenommen, sofern dies noch nicht zur Überführung in die Sitzkonfiguration erfolgt ist. Im hier gezeigten Beispiel wird der Sicherheitsbügel 9 aus der nach oben geschwenkten Stellung der Sitzkonfiguration zum Überführen in die Transportkonfiguration nach unten geschwenkt und liegt insbesondere zumindest im Wesentlichen an der Sitzfläche 6 an und/oder parallel zur Sitzfläche 6.

Bei einer bevorzugten Ausführungsform beträgt die Zeit zur Überführung des Fahrzeugs 1 von der Fahrkonfiguration in die Sitzkonfiguration höchstens 60 Sekunden, vorzugsweise höchstens 30 Sekunden, von der Sitzkonfiguration in die Transportkonfiguration höchstens 20 Sekunden, vorzugsweise höchstens 10 Sekunden, und/oder von der Fahrkonfiguration in die Transportkonfiguration höchstens 60 Sekunden, vorzugsweise höchstens 30 Sekunden.

Der Sicherungsbügel 9 und/oder die Sitzfläche 6 lassen sich vorzugsweise in definierten Positionen, insbesondere im aus- und/oder eingeschwenkten Zustand fixieren. Hierzu kann eine Rastverbindung und/oder ein formschlüssig wirkendes Fixierelement eingesetzt werden.

In der Transportkonfiguration lässt sich das Fahrzeug 1 vorzugsweise mittels eines Griffelements vom Benutzer leicht bewegen. Ein solches Griffelement kann als gesonderter Griff des Fahrzeugs 1 vorgesehen sein. Darüber hinaus kann jedoch auch ein Bauteil des Fahrzeugs 1 mit einer anderen Funktion, insbesondere die Trageinrichtung 19, als Griffelement verwendet werden.

Um die Abmessungen des Fahrzeugs 1 in der Transportkonfiguration weiter zu reduzieren, lässt sich der Abstand des vorderen Radaufbaus 3 und des hinteren Radaufbaus 4 vorzugsweise gegenüber der Sitzkonfiguration weiter verringern. Hierzu kann der hintere Radaufbau 4 eine Schwinge 20 umfassen oder an einer Schwinge 20 befestigt sein, bzw. mittels einer Schwinge 20 mit der Verstelleinrichtung 12 und oder dem Sitzgestell 16 verbunden sein.

Die Schwinge 20 ist insbesondere gelenkig gelagert, so dass der hintere Radaufbau 4, wie in Fig. 7 gezeigt, weiter an den vorderen Radaufbau 3 herangeschwenkt werden kann.

Mittels einer Schwinge 20 kann der hintere Radaufbau 4 auch bei der Überführung von der Fahr- in die Sitzkonfiguration weiter an den vorderen Radaufbau 3 herangerückt werden. Hierdurch erhält das Fahrzeug 1 zum einen kompaktere Außenabmessungen. Zum anderen wird die Neigung des Fahrzeugs 1 bzw. der Sitzfläche 6 und/oder der Lehne 7 gegenüber dem Boden insbesondere steiler gestellt, so dass eine angenehmere und aufrechtere Sitzhaltung möglich ist. Bevorzugt erfolgt ein Verschenken der Schwinge 20 bzw. des hinteren Radaufbaus 4 in Richtung des vorderen Radaufbaus 3 selbstständig, wenn das Fahrzeug 1 bei der Überführung in die Sitzkonfiguration ein Stück aufgerichtet wird.

Die Schwinge 20 erlaubt alternativ oder zusätzlich eine Erhöhung des Komforts durch die Funktion einer Schwingungsdämpfung. Hierzu kann die Schwinge 20 elastisch bzw. federnd gelagert sein, so dass der hintere Radaufbau 4 nach einer Auslenkung wieder in eine neutrale Position zurückkehrt. Hierdurch werden Stöße, die während der Fahrt auf den hinteren Radaufbau 4 einwirken, nicht an den Fahrer weitergegeben. Eine nicht starre Verbindung zwischen dem hinteren Radaufbau 4 und der Verstelleinrichtung 12 bzw. dem Sitzgestell 16 sorgt somit für eine dynamische Stabilisierung des hinteren Fahrzeugabschnitts 14.

Zur Fortbewegung mit dem Fahrzeug 1 ist alternativ oder zusätzlich zu der Antriebseinrichtung 5 eine biomechanische Antriebsmöglichkeit vorgesehen. Zur biomechanisch angetriebenen Fortbewegung eignet sich insbesondere eine Tretkurbelanordnung 21. Zum einen kann durch die Tretkurbelanordnung 21 ein biomechanischer Vortrieb des Fahrzeugs 1 bewirkt werden, wenn die auf die Pedale 22 ausgeübte Muskelkraft an wenigstens ein Rad 2, insbesondere mindestens ein Rad 2 des vorderen Radaufbaus 3, übertragen wird. Zum anderen kann die Tretkurbelanordnung 21 so ausgeführt sein, dass durch die Betätigung von Pedalen 22 ein Kettenrad 23 bewegt wird. Das Kettenrad 23 wirkt über eine Kette 24 auf ein Kettenritzel 25. Das Kettenritzel 25 ist insbesondere kleiner als das Kettenrad 23.

Anstelle einer Kette 24 kann auch eine Verbindung zwischen dem Kettenrad 23 und dem Kettenritzel 25 durch einen Zahnriemen hergestellt sein.

In einer besonders bevorzugten Ausführungsform wird das Fahrzeug 1 lediglich von der Energie angetrieben, die durch den Benutzer eingebracht wird. In dieser Variante ist eine Fortbewegung zum einen auf besonders ökologisch verträgliche Weise möglich. Zum anderen fördert die körperliche Betätigung zusätzlich die Gesundheit des Benutzers. Dies ist grundsätzlich bei allen biomechanisch angetriebenen Fahrzeugen der Fall. Das erfindungsgemäße Fahrzeug 1 besitzt im Vergleich jedoch eine bedeutend höhere Alltagstauglichkeit. Durch die problemlose Nutzung in Verbindung mit einem Trägerfahrzeug wird insbesondere die Reichweite erheblich vergrößert. Dies erlaubt letztlich eine deutlich umfangreichere und stärker verbreitete Nutzung des erfindungsgemäßen Fahrzeugs 1. Die genannten Vorteile einer biomechanisch geprägten Mobilität können somit nun in einem Maß zum Tragen kommen, dass positive gesamtökologische und volkswirtschaftliche Auswirkungen spürbar werden.

Darüber hinaus kann der zusätzliche Einsatz von Muskelkraft auch mit einer Antriebseinrichtung 5 zusammenwirken. Hierbei ist insbesondere eine Antriebsform bevorzugt, die bei sogenannten Pedelecs oder E-Bikes zum Einsatz kommt. Hierbei wird der biomechanische Antrieb durch die Antriebseinrichtung 5, insbesondere einen Nabenmotor bedarfsweise unterstützt, wobei insbesondere der Umfang der Unterstützung einstellbar ist.

Bevorzugt ist die Tretkurbelanordnung 21 insbesondere mittels eines Rastgelenks in ihrer Neigung und/oder ihrem Abstand zur Sitzfläche 6 einstellbar.

Eine Anordnung zum biomechanischen Antrieb des Fahrzeugs 1, wie eine Tretkurbelanordnung 21, kann ferner rekuperativ genutzt werden, d. h. insbesondere zum Wiederaufladen eines Energiespeichers durch eingesetzte Muskelkraft des Benutzers.

Das Zusammenwirken der Tretkurbelanordnung 21 und der Antriebseinrichtung 5, insbesondere zur Rekuperation und/oder zum Zusammenwirken beim Vortrieb, erfolgt vorzugsweise gekoppelt über einen Zahnriemen. Eine entsprechende Zahnriemenanordnung ist dabei insbesondere derart ausgebildet, dass auch bei verändertem Abstand des vorderen Radaufbaus 3 und des hinteren Radaufbaus 4 die Zahnriemenlänge konstant bleiben kann, d. h der Zahnriemen weiterhin gespannt ist. Der Zahnriemen verläuft insbesondere um das Kettenritzel 25 von dem er vorzugsweise angetrieben wird. Darüber hinaus ist der Zahnriemen insbesondere mit dem hinteren Radaufbau 4 gekoppelt, wo er beispielsweise um ein weiteres, hinteres Kettenritzel verläuft.

Bei einer bevorzugten Ausführungsform des Fahrzeugs 1 ist die Antriebseinrichtung 5 dem hinteren Radaufbau 4 zugeordnet.

Vorzugsweise ist ferner die Tretkurbelanordnung 21 so konstruiert, dass die aufgebrachte Muskelkraft unmittelbar oder mittelbar auf wenigstens ein Rad 2 des vorderen Radaufbaus 3 wirkt.

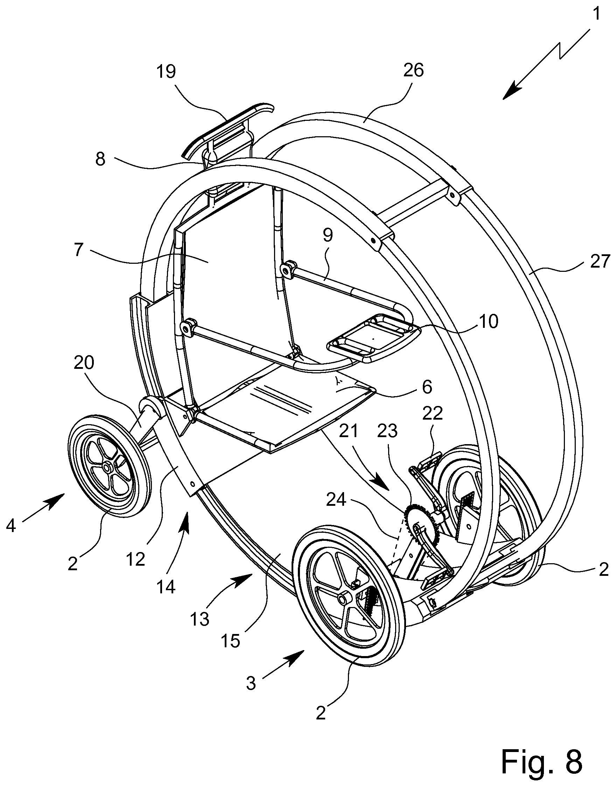

Bei der in Fig. 8 gezeigten weiteren bevorzugten Ausführungsform des erfindungsgemäßen Fahrzeugs 1 ist ein vorzugsweise umlaufender Rahmen vorgesehen, der den hinteren Fahrzeugabschnitt 14 und den vorderen Fahrzeugabschnitt 13 oberhalb des bzw. vor dem Benutzer miteinander verbindet. Hierdurch entsteht eine im Wesentlichen geschlossene Form des Fahrzeugs 1. Insbesondere entsteht durch die Umschließung eines Bereichs um den Fahrer herum eine Art Fahrgastzelle, die dem Fahrer weitere Sicherheit, insbesondere bei Kollisionen, bietet.

Vorliegend ist der Rahmen mehrteilig ausgebildet und umfasst einen hinteren Rahmenteil 26 sowie einen vorderen Rahmenteil 27. Es versteht sich, dass ein solcher Rahmen auch einteilig ausgebildet sein kann. Zur Überführung des Fahrzeugs 1 von der in Fig. 8 gezeigten Fahrkonfiguration in eine Sitzkonfiguration und/oder eine Transportkonfiguration wird der Rahmen insbesondere durch Zusammenschieben der Rahmenteile 26, 27 eingefahren, wodurch das Fahrzeug 1 eine kompakte Außenform erhält, wie zuvor beschrieben.

Die Rahmenteile 26, 27 können ferner jeweils eine Abschirmung aufweisen, ähnlich den zuvor beschriebenen Scheiben 17, 18.

### Bezugszeichenliste:

- 1: Fahrzeug
- 2: Rad
- 3: vorderer Radaufbau
- 4: hinterer Radaufbau
- 5: Antriebseinrichtung
- 6: Sitzfläche
- 7: Lehne
- 8: Kopfstütze
- 9: Sicherheitsbügel
- 10: Steuereinrichtung
- 11: Halteelement
- 12: Verstelleinrichtung
- 13: vorderer Fahrzeugabschnitt
- 14: hinterer Fahrzeugabschnitt
- 15: Grundgestell
- 16: Sitzgestell
- 17: untere Scheibe
- 18: obere Scheibe
- 19: Trageinrichtung
- 20: Schwinge
- 21: Tretkurbelanordnung
- 22: Pedal
- 23: Kettenrad
- 24: Kette
- 25: Kettenritzel
- 26: hinterer Rahmenteil
- 27: vorderer Rahmenteil

## Patentansprüche

1. Leichtfahrzeug (1), mit einem wenigstens zwei Räder (2) aufweisenden vorderen Radaufbau (3), mit einem wenigstens ein Rad (2) aufweisenden hinteren Radaufbau (4) und mit einer Antriebseinrichtung (5) zur selbstständigen Bewegung des Fahrzeugs (1),
wobei eine Verstelleinrichtung (12) zur Veränderung des Abstands des vorderen Radaufbaus (3) und des hinteren Radaufbaus (4) vorgesehen ist, mittels derer das Fahrzeug (1) reversibel von einer Fahrkonfiguration in eine im Vergleich zur Fahrkonfiguration kompaktere Sitzkonfiguration überführbar ist, wobei das Fahrzeug (1) in der Sitzkonfiguration eine Sitzfläche (6) aufweist und wobei der Abstand zwischen dem vorderen Radaufbau (3) und dem hinteren Radaufbau (4) des Fahrzeugs (1) in der Sitzkonfiguration geringer ist als in der Fahrkonfiguration und das Fahrzeug (1) bei stabilem Stand eine gegenüber der Fahrkonfiguration geringere Grundfläche beansprucht, **dadurch gekennzeichnet, dass** eine Feststelleinrichtung zum Blockieren wenigstens eines Rades (2), vorzugsweise aller Räder (2), vorgesehen ist, wobei die Feststelleinrichtung durch Überführen des Fahrzeugs (1) in die Sitzkonfiguration aktivierbar ist.

2. Fahrzeug nach Anspruch 1, **dadurch gekennzeichnet, dass** das Fahrzeug (1) ferner in eine Transportkonfiguration überführbar ist, vorzugsweise wobei der Abstand des vorderen Radaufbaus (3) und des hinteren Radaufbaus (4) in der Transportkonfiguration geringer ist als in der Sitzkonfiguration.

3. Fahrzeug nach einem der vorhergehenden Ansprüche, **dadurch gekennzeichnet, dass** der vordere Radaufbau (3) einem vorderen Fahrzeugabschnitt (13) zugeordnet ist und der hintere Radaufbau (4) einem hinteren Fahrzeugabschnitt (14) zugeordnet ist.

4. Fahrzeug nach Anspruch 3, **dadurch gekennzeichnet, dass** der vordere Fahrzeugabschnitt (13) und der hintere Fahrzeugabschnitt (14) gelenkig miteinander verbunden sind.

5. Fahrzeug nach Anspruch 3, **dadurch gekennzeichnet, dass** der vordere Fahrzeugabschnitt (13) und der hintere Fahrzeugabschnitt (14) verschieblich miteinander verbunden sind.

6. Fahrzeug nach einem der Ansprüche 3 bis 5, **dadurch gekennzeichnet, dass** der vordere Fahrzeugschnitt (13) ein insbesondere bogenförmiges Grundgestell (15) und/oder der hintere Fahrzeugabschnitt (14) eine insbesondere bogenförmige Verstelleinrichtung (12) und/oder ein insbesondere bogenförmiges Sitzgestell (16) aufweist.

7. Fahrzeug nach einem der vorhergehenden Ansprüche, **dadurch gekennzeichnet, dass** die Antriebseinrichtung (5) einen Elektromotor umfasst und/oder dass der Antriebseinrichtung (5) eine Brennstoffzelle und/oder eine Photovoltaikeinrichtung zugeordnet ist.

8. Fahrzeug nach einem der vorhergehenden Ansprüche, **dadurch gekennzeichnet, dass** das Fahrzeug (1) zur biomechanisch angetriebenen Fortbewegung, vorzugsweise mittels einer Tretkurbeleinrichtung (21), ausgebildet ist.

9. Fahrzeug nach einem der vorhergehenden Ansprüche, **dadurch gekennzeichnet, dass** die Antriebseinrichtung (5) zum Beschleunigen des Fahrzeugs (1) auf eine Geschwindigkeit von mindestens 5 km/h, vorzugsweise mindestens 10 km/h, bevorzugt mindestens 25 km/h, besonders bevorzugt mindestens 45 km/h geeignet ist.

10. Fahrzeug nach einem der vorhergehenden Ansprüche, **dadurch gekennzeichnet, dass** eine Kopplungseinrichtung zur Kopplung des Fahrzeugs (1) mit einer korrespondierenden Kopplungsaufnahme, insbesondere einer Kopplungsaufnahme eines Sammeltransportmittels, vorgesehen ist.

11. Fahrzeug nach einem der vorhergehenden Ansprüche, **dadurch gekennzeichnet, dass** ein insbesondere ausziehbares Griffelement vorgesehen ist.

12. Fahrzeug nach einem der vorhergehenden Ansprüche, **dadurch gekennzeichnet, dass** eine vorzugsweise ausfahrbare oder ausschwenkbare Stützeinrichtung zur Stabilisierung des Fahrzeugs (1) in einer stehenden Position insbesondere in der Transportkonfiguration vorgesehen ist.

## Claims

1. Light vehicle (1), having a front wheel structure (3) which has at least two wheels (2), having a rear wheel structure (4) which has at least one wheel (2), and having a drive device (5) for the autonomous movement of the vehicle (1), wherein an adjusting device (12) for changing the distance between the front wheel structure (3) and the rear wheel structure (4) is provided, by means of which adjusting device (12) the vehicle (1) can be reversibly transferred from a driving configuration into a seating configuration which is more compact in comparison to the driving configuration, wherein the vehicle (1) has a seat surface (6) in the seating configuration, and wherein the distance between the front wheel structure (3) and the rear wheel structure (4) of the vehicle (1) is smaller in the seating configuration than in the driving configuration, and the vehicle (1), in a stable state, takes up a smaller footprint than in the driving configuration, **characterized in that** a fixing device for blocking at least one wheel (2), preferably all wheels (2), is provided, wherein the fixing device can be activated by transferring the vehicle (1) into the seating configuration.

2. Vehicle according to Claim 1, **characterized in that** the vehicle (1) can also be transferred into a transport configuration, preferably wherein the distance between the front wheel structure (3) and the rear wheel structure (4) is smaller in the transport configuration than in the seating configuration.

3. Vehicle according to one of the preceding claims, **characterized in that** the front wheel structure (3) is assigned to a front vehicle section (13), and the rear wheel structure (4) is assigned to a rear vehicle section (14).

4. Vehicle according to Claim 3, **characterized in that** the front vehicle section (13) and the rear vehicle section (14) are connected to one another in an articulated manner.

5. Vehicle according to Claim 3, **characterized in that** the front vehicle section (13) and the rear vehicle section (14) are connected to one another in a displaceable manner.

6. Vehicle according to one of Claims 3 to 5, **characterized in that** the front vehicle section (13) has an in particular arcuate basic frame (15), and/or the rear vehicle section (14) has an in particular arcuate adjusting device (12) and/or an in particular arcuate seating frame (16).

7. Vehicle according to one of the preceding claims, **characterized in that** the drive device (5) comprises an electric motor, and/or **in that** a fuel cell and/or a photovoltaic device is/are assigned to the drive device (5).

8. Vehicle according to one of the preceding claims, **characterized in that** the vehicle (1) is designed for biomechanically driven locomotion, preferably by means of a pedal crank device (21).

9. Vehicle according to one of the preceding claims, **characterized in that** the drive device (5) is suitable for accelerating the vehicle (1) to a speed of at least 5 km/h, preferably at least 10 km/h, preferably at least 25 km/h, particularly preferably at least 45 km/h.

10. Vehicle according to one of the preceding claims, **characterized in that** a coupling device for coupling the vehicle (1) to a corresponding coupling receptacle, in particular a coupling receptacle of a collective transport means, is provided.

11. Vehicle according to one of the preceding claims, **characterized in that** an in particular extendable grip element is provided.

12. Vehicle according to one of the preceding claims, **characterized in that** a preferably extendable or pivotable support device for stabilizing the vehicle (1) in a standing position, in particular in the transport configuration, is provided.

## Revendications

1. Véhicule léger (1), comprenant une structure de roue avant (3) présentant au moins deux roues (2), comprenant une structure de roue arrière (4) présentant au moins une roue (2) et comprenant un dispositif d'entraînement (5) pour le déplacement autonome du véhicule (1), un dispositif de réglage (12) étant prévu pour modifier la distance entre la structure de roue avant (3) et la structure de roue arrière (4), au moyen duquel dispositif de réglage le véhicule (1) peut être transféré de manière réversible d'une configuration de conduite à une configuration d'assise plus compacte par rapport à la configuration de conduite, le véhicule (1) présentant une surface d'assise (6) dans la configuration d'assise et la distance entre la structure de roue avant (3) et la structure de roue arrière (4) du véhicule (1) étant plus faible dans la configuration d'assise que dans la configuration de conduite et le véhicule (1) sollicitant en position stable une surface de base plus faible par rapport à la configuration de conduite, **caractérisé en ce qu'**un dispositif de blocage est prévu pour bloquer au moins une roue (2), de préférence toutes les roues (2), le dispositif de blocage pouvant être activé par transfert du véhicule (1) dans la configuration d'assise.

2. Véhicule selon la revendication 1, **caractérisé en ce que** le véhicule (1) peut en outre être transféré dans une configuration de transport, de préférence la distance entre la structure de roue avant (3) et la structure de roue arrière (4) étant plus faible dans la configuration de transport que dans la configuration d'assise.

3. Véhicule selon l'une quelconque des revendications précédentes, **caractérisé en ce que** la structure de roue avant (3) est associée à une section de véhicule avant (13) et la structure de roue arrière (4) est associée à une section de véhicule arrière (14).

4. Véhicule selon la revendication 3, **caractérisé en ce que** la section de véhicule avant (13) et la section de véhicule arrière (14) sont connectées l'une à l'autre de manière articulée.

5. Véhicule selon la revendication 3, **caractérisé en ce que** la section de véhicule avant (13) et la section de véhicule arrière (14) sont connectées l'une à l'autre de manière déplaçable.

6. Véhicule selon l'une quelconque des revendications 3 à 5, **caractérisé en ce que** la section de véhicule avant (13) présente un châssis de base (15) en particulier en forme d'arc et/ou la section de véhicule arrière (14) présente un dispositif de réglage (12) en particulier en forme d'arc et/ou un châssis d'assise (16) en particulier en forme d'arc.

7. Véhicule selon l'une quelconque des revendications précédentes, **caractérisé en ce que** le dispositif d'entraînement (5) comprend un moteur électrique et/ou **en ce qu'**une pile à combustible et/ou un dispositif photovoltaïque est associé au dispositif d'entraînement (5).

8. Véhicule selon l'une quelconque des revendications précédentes, **caractérisé en ce que** le véhicule (1) est réalisé pour le déplacement entraîné de manière biomécanique, de préférence au moyen d'un dispositif de pédalier (21).

9. Véhicule selon l'une quelconque des revendications précédentes, **caractérisé en ce que** le dispositif d'entraînement (5) est approprié pour accélérer le véhicule (1) à une vitesse d'au moins 5 km/h, de préférence d'au moins 10 km/h, de préférence d'au moins 25 km/h, de manière particulièrement préférée d'au moins 45 km/h.

10. Véhicule selon l'une quelconque des revendications précédentes, **caractérisé en ce qu'**un dispositif de couplage est prévu pour coupler le véhicule (1) à un logement de couplage correspondant, en particulier un logement de couplage d'un moyen de transport collectif.

11. Véhicule selon l'une quelconque des revendications précédentes, **caractérisé en ce qu'**un élément de préhension en particulier extensible est prévu.

12. Véhicule selon l'une quelconque des revendications précédentes, **caractérisé en ce qu'**un dispositif de support de préférence extensible ou pivotant est prévu pour stabiliser le véhicule (1) dans une position debout, en particulier dans la configuration de transport.
